# EUROPÄISCHE PATENTSCHRIFT

(11) **EP 2 841 304 B1**
(45) Veröffentlichungstag und Bekanntmachung des Hinweises auf die Patenterteilung: **16.03.2016**
(21) Anmeldenummer: 13711366.8
(22) Anmeldetag: 21.03.2013
(51) Int. Cl.: B60R 9/10, B60R 9/06

(54) **ZUSAMMENKLAPPBARER FAHRRADTRÄGER MIT ERWEITERUNGSSATZ**
COLLAPSABLE BICYCLE RACK WITH AN EXPANSION SET
PORTE-VÉLO REPLIABLE COMPRENANT UN KIT D'EXTENSION

(30) Priorität: 26.04.2012 DE 102012103697
(43) Veröffentlichungstag der Anmeldung: 04.03.2015
(73) Patentinhaber: I-Racks GmbH, 88284 Wolpertswende (DE)
(72) Erfinder: ZIOLA, Stefan, 88284 Wolpertswende (DE)
(74) Vertreter: Patentanwälte Hosenthien-Held und Dr. Held
(86) Internationale Anmeldenummer: PCT/EP2013/055910
(87) Internationale Veröffentlichungsnummer: WO 2013/160034

(56) Entgegenhaltungen:
- DE-A1-102007 017 164
- DE-A1-102007 039 196
- FR-A1- 2 829 082

## Beschreibung

Die Erfindung betrifft einen zusammenklappbaren Fahrradträger, insbesondere einen Heckträger, mit Erweiterungssatz.

Es sind Erweiterungssätze für zusammenklappbare Fahrradträger bekannt, die aus mehreren Teilen zusammengesetzt am Fahrradträger befestigbar sind, um den Transport eines weiteren Fahrrades zu ermöglichen. Der Nachteil dieser Fahrradträger ist, dass sie jedes Mal vom Fahrradträger abgebaut werden müssen, um das ursprüngliche Packmaß des Fahrradträgers, d.h. Lmax x Bmax x Hmax, wobei Lmax die maximale Länge, Bmax die maximale Breite und Hmax die maximale Höhe ist, im zusammengefalteten Zustand beizubehalten oder sich das Packmaß in mindestens einer Richtung, in der Regel aber in mehreren Richtungen vergrößert.

Die DE 10 2007 017 164 A1 offenbart, gemäß den Oberbegriff des Patentanspruchs 1, einen Lastenträger zum Ausziehen aus einem Fahrzeugheck, bei dem ein Rahmen an mindestens einem mit einer Schwenkachse ausgestatteten und längsverschiebbaren Element durch den Stoßfänger eines Kraftfahrzeugs geführt ist oder unter dem Stoßfänger des Kraftfahrzeugs geführt ist. Hierbei kann das längsverschiebbare Element durch zwei miteinander fest verbundene Träger gebildet sein, an denen seitlich zwei seitliche, flügelartig ausgebildete Stellbereiche um 180° ausklappbar schwenkbar angeordnet sind. An den flügelartig ausgebildeten Stellbereichen ist hinten jeweils ein weiterer hinterer, flügelartig ausgebildeter Stellbereich um 180° schwenkbar, angebracht. Im zusammengefalteten Zustand liegt der hintere Stellbereich innerhalb der seitlichen Stellbereiche, die ihrerseits übereinanderliegend zwischen den beiden Trägern angeordnet sind.

Aus der nachveröffentlichten DE 10 2011 108 659 A1 ist ein zusammenklappbarer Fahrradträger mit mindestens einem Stellbereich, auf welchen zu transportierende Last, insbesondere mindestens ein Fahrrad, stellbar ist, und mit einer Kupplungsvorrichtung bekannt, welcher an einer Anhängerkupplung mit einem im Wesentlichen kugelförmigen Kopf lösbar anbringbar ist. Hierbei ist der Fahrradträger stabilisiert auf die Anhängerkupplung aufsetzbar, anschließend ist ein Spannbügel über den Kopf der Anhängerkupplung schwenkbar und mittels Spannens eines Spannbügels fixierbar. Das Einschwenken und Spannen des Spannbügels erfolgt hierbei durch eine Schwenkbewegung eines einzigen als Bedienelement dienenden Hebels um eine Schwenkachse, wobei der als Bedienelement dienende Hebel gleichzeitig auch den Stellbereich bildet oder trägt.

Durch Benutzung ist ferner ein Fahrradträger bekannt, welcher in der Grundform für zwei Fahrräder nutzbar ist, wobei ausgehend von einer breiten Basis jeweils Stellbereiche für die Laufräder bildende Arme vorgesehen sind, die bei Nutzung als Fahrradträger ausklappbar sind. Für diesen Fahrradträger ist ein Erweiterungssatz für ein weiteres Fahrrad vorgesehen, der direkt an der Basis angebracht wird. Entsprechend dem Fahrradträger weist dieser Erweiterungssatz zwei Arme auf, welche Stellbereiche für die Laufräder des zusätzlichen Fahrrades bilden. Diese Arme sind einzeln und unabhängig von den Armen des Fahrradträgers zurückklappbar.

Der Erfindung liegt die Aufgabe zu Grunde, einen Erweiterungssatz für einen Fahrradträger zur Verfügung zu stellen, insbesondere soll der Erweiterungssatz ermöglichen, dass mehrere Fahrräder transportiert werden können. Hierbei soll die Handhabung möglichst einfach und flexibel sein.

Diese Aufgabe wird erfindungsgemäß durch einen Fahrradträger mit Erweiterungssatz mit den Merkmalen des Anspruchs 1 gelöst. Vorteilhafte Ausgestaltungen sind Gegenstand der Unteransprüche.

Hierbei ist erfindungsgemäß der Erweiterungssatz am klappbaren Bereich des Fahrradträgers angebracht, so dass der Fahrradträger mitsamt dem Erweiterungssatz zusammenklappbar ist, d.h. der Fahrradträger lässt sich auf herkömmliche Weise zusammenklappen, wobei gleichzeitig auch der Erweiterungssatz, der am Fahrradträger angebracht ist, zusammengeklappt wird. Im Unterschied zum bekannten Fahrradträger mit Erweiterungssatz ist keine getrennte Bedienung für das Zusammenklappen erforderlich. Hierbei ist der Erweiterungssatz nicht an einem zentralen Träger des Fahrradträgers angebracht, sondern direkt an die Stellflächen bildenden oder tragenden Trägerarmen angebracht, was Gewichtsvorteile mit sich bringt.

Der Erweiterungssatz ist mehrteilig ausgebildet, wobei der erste und der zweite Stellbereich des Erweiterungssatzes jeweils einem anderen Teil zugeordnet ist. Die Teile des Erweiterungssatzes werden in einem Zwischenschritt zum Zusammenklappen des Fahrradträgers samt Erweiterungssatz zwischen den entsprechenden zwei Stellbereichen des Fahrradträgers positioniert. Dies ermöglicht ein Packmaß, welches sich nicht oder nur unwesentlich vom Packmaß des Fahrradträgers ohne Erweiterungssatz unterscheidet. Durch das geschickte Klappen durch ein erstes Zurückklappen oder -schwenken des Erweiterungssatzes in Richtung Fahrradträger und ein anschließendes Zusammenklappen des Fahrradträgers samt Erweiterungssatz lässt sich ein deutlich reduziertes Packmaß (d.h. Lmax x Bmax x Hmax, wobei Lmax die maximale Länge, Bmax die maximale Breite und Hmax die maximale Höhe ist) realisieren. Im Idealfall ist ein Zusammenklappen möglich, welches das ursprüngliche Packmaß des Fahrradträgers ohne Erweiterungssatz überhaupt nicht vergrößert.

Insbesondere bevorzugt sind nach dem Zwischenschritt des Zurückklappens der beiden Stellbereiche des Erweiterungssatzes die Stellbereiche des Fahrradträgers weiterhin uneingeschränkt nutzbar. Dies ermöglicht eine geringere Länge des Fahrradträgers samt Erweiterungssatz, insbesondere eine dem normalen Fahrradträger entsprechende Länge, bei der Benutzung mit einem oder zwei Fahrrädern. Insbesondere kann der Ergänzungssatz des Fahrradträgers ohne Beeinträchtigungen der Nutzbarkeit am Fahrradträger verbleiben.

Die verschwenkbare Lagerung der beiden Teile des Erweiterungssatzes weist erfindungsgemäß jeweils ein gemeinsames, in Lagern schwenkbar gelagertes Element auf, welches ein Verspannen gegen den Lastenträger in der vorgeschwenkten Stellung und in der zurückgeschwenkten Stellung ermöglicht, wobei das schwenkbar gelagerte Element neben dem Lager für das Teil des Erweiterungssatzes ein zweites, exzentrisch zu diesem ersten Lager angeordnetes zweites Lager aufweist, mittels dessen das Element am Fahrradträger gelagert ist. Das schwenkbar gelagerte Element ist vorzugsweise ein Bolzen mit exzentrisch in Bezug auf die Bolzenlängsachse angeordneten Lagerstellen für das erste Lager, mittels dessen der Bolzen mit dem Fahrradträger verbunden ist, und das zweite Lager, mittels dessen der Bolzen mit dem den ersten oder zweiten Stellbereich umfassenden Teil des Erweiterungssatzes verbunden ist, wobei bevorzugt das zweite Lager zweigeteilt und beidseitig des ersten Lagers angeordnet ist. Durch Schwenken des Bolzens lässt sich die Verspannung des entsprechende Teil des Erweiterungssatzes mit dem Lastenträger lösen, und der entsprechende Teil des Erweiterungssatzes lässt sich in der Lagerstelle des zweiten Lagers um den Bolzen schwenken. Anstelle dieses Verspannens ist jedoch eine beliebige andere Fixierung in den Endstellungen möglich.

Vorzugsweise ist ein Halter am Stützbügel lösbar angebracht, welcher einen ergänzenden Teil des Erweiterungssatzes bilden kann. Besonders bevorzugt vergrößert der Halter das Packmaß nicht oder nur unwesentlich.

Vorzugsweise weist der Fahrradträger eine Kupplungsvorrichtung auf, mit welcher er an einer Anhängerkupplung mit einem im Wesentlichen kugelförmigen Kopf lösbar anbringbar ist, wobei der Fahrradträger stabilisiert auf die Anhängerkupplung aufsetzbar ist, anschließend ein Spannbügel über den Kopf der Anhängerkupplung schwenkbar und mittels Spannens eines Spannbügels fixierbar ist. Insbesondere bevorzugt erfolgt das Einschwenken und Spannen des Spannbügels durch eine Schwenkbewegung eines einzigen als Bedienelement dienenden Hebels um eine Hebelarm-Schwenkachse, wobei der als Bedienelement dienende Hebel gleichzeitig auch mindestens einen Stellbereich des Fahrradträgers bildet oder trägt. Insbesondere bevorzugt ändert sich die Bedienfunktion zum Zusammenklappen auch mit angebautem Erweiterungssatz nicht.

Obwohl im Folgenden als Fahrradträger auf sogenannte Heckträger Bezug genommen wird, kann bei Sonderfahrzeugen die Anhängerkupplung auch an einer anderen Seite des Fahrzeugs vorgesehen sein, beispielsweise an der Vorderseite. Selbstverständlich kann der erfindungsgemäße Fahrradträger auch hierfür verwendet werden.

Ferner ist ein derartiger Erweiterungssatz nicht auf Fahrradträger beschränkt, die an Anhängerkupplungen mit einem Kugelkopf anbringbar sind, sondern kann ohne Veränderungen auch für entsprechend klappbare Fahrradträger verwendet werden, die auf andere Weise an Fahrzeugen angebracht werden.

Im Folgenden ist die Erfindung anhand eines Ausführungsbeispiels unter Bezugnahme auf die beiliegende Zeichnung näher erläutert. In der Zeichnung zeigen:
- Fig. 1: eine perspektivische Ansicht eines Fahrradträgers mit Erweiterungssatz in einsatzbereiter Stellung gemäß dem Ausführungsbeispiel,
- Fig. 2: eine Fig. 1 entsprechende Ansicht in einem Zwischenschritt des Zusammenklappens oder bei Benutzung des Fahrradträgers für zwei Fahrräder,

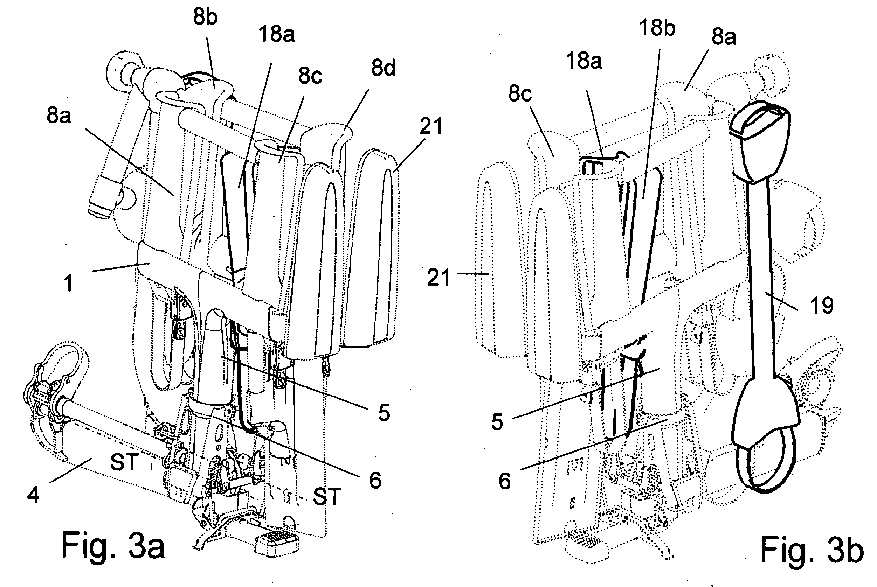

- Fig. 3a: eine Fig. 1 entsprechende Ansicht im zusammengeklappten Zustand,
- Fig. 3b: eine andere perspektivische Ansicht des Fahrradträgers von Fig. 3a,
- Fig. 4: eine Draufsicht auf den Fahrradträger von Fig. 1,
- Fig. 5a: einen Schnitt entlang Linie A-A von Fig. 4,
- Fig. 5b: eine Fig. 5a entsprechende Ansicht in einem Zwischenschritt des Zusammenklappens,
- Fig. 5c: eine Fig. 5a entsprechende Ansicht im zusammengeklappten Zustand,

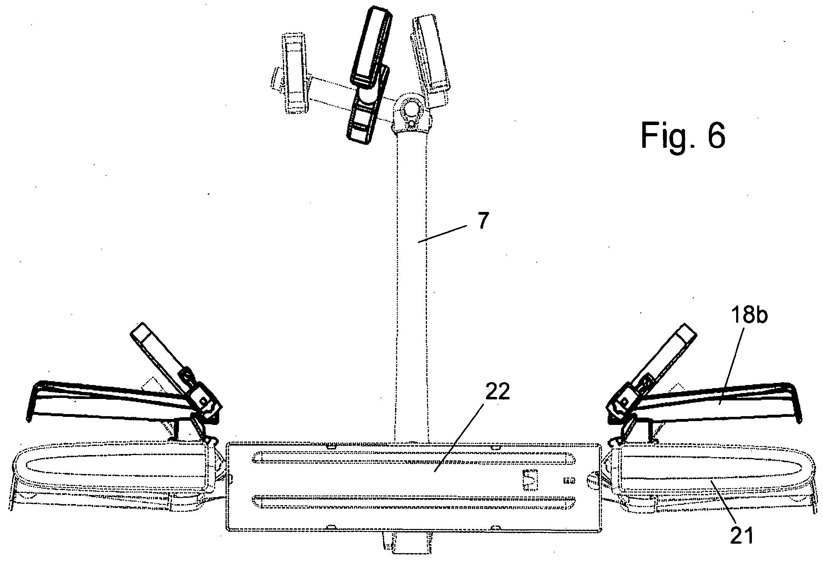

- Fig. 6: eine Rückansicht des Fahrradträgers von Fig. 1,
- Fig. 7a: eine Fig. 6 entsprechende Ansicht in einem Zwischenschritt des Zusammenklappens,
- Fig. 7b: eine Fig. 6 entsprechende Ansicht im zusammengeklappten Zustand,
- Fig. 7c: eine Seitenansicht des Fahrradträgers von Fig. 1 von links im zusammengeklappten Zustand,
- Fig. 8a: eine perspektivische Darstellung eines Fahrradträgers mit einem alternativen Erweiterungssatz,
- Fig. 8b: eine Draufsicht auf den Fahrradträger mit Erweiterungssatz von Fig. 8a,
- Fig. 8c: eine Rückansicht des Fahrradträgers mit Erweiterungssatz von Fig. 8a,
- Fig. 8d: eine perspektivische Darstellung eines Fahrradträgers mit einem alternativen Erweiterungssatz in einem Zwischenschritt des Zusammenklappens oder bei Benutzung des Fahrradträgers für zwei Fahrräder,
- Fig. 8e: eine Draufsicht auf den Fahrradträger mit Erweiterungssatz von Fig. 8d,
- Fig. 9a: eine perspektivische Darstellung eines Fahrradträgers mit Erweiterungssatz von Fig. 8a in zusammengeklapptem Zustand,
- Fig. 9b: eine andere perspektivische Darstellung des Fahrradträgers mit Erweiterungssatz von Fig. 9a,
- Fig. 9c: eine Seitenansicht des Fahrradträgers mit Erweiterungssatz von Fig. 9a,
- Fio. 10a: eine Fig. 5a entsprechende Darstellung mit alternativer Fixierung des den Stellbereich des Erweiterungssatzes tragenden Arms, die in Alleinstellung nicht Gegenstand der Erfindung ist,
- Fig. 10b: eine Zwischenstellung, und
- Fig. 10c: die zurückgeschwenkte und fixierte Stellung des den Stellbereich des Erweiterungssatzes tragenden Arms.

Bei der folgenden Beschreibung wird von einem als Heckträger an einer Anhängerkupplung angebrachten Fahrradträger 1, wie in der nachveröffentlichten DE 10 2011 108 659 A1 offenbart, ausgegangen. Dieser Fahrradträger 1 ist in den Figuren gestrichelt dargestellt. Die Richtungsangaben beziehen sich auf die normale Fahrtrichtung des Fahrzeugs, wobei x die Richtung entgegen der Fahrtrichtung, y die Querrichtung und die vertikale Richtung mit z bezeichnet, und der Fahrradträger 1 als Heckträger an der Anhängerkupplung angebracht ist.

Der Fahrradträger 1 ist mit Hilfe einer Kupplungsvorrichtung 2 an einer nicht dargestellten Anhängerkupplung eines Kraftfahrzeugs auf die in der o.g. Druckschrift beschriebene Weise anbringbar. Der Fahrradträger 1 hat einen zentralen Träger 4, welcher bei einem korrekt an einem Kraftfahrzeug als Heckträger angebrachten Fahrradträger 1 in Fahrzeuglängsrichtung verlaufend ausgerichtet ist und im Querschnitt im Wesentlichen die Gestalt eines geschlossenen Hohlprofils aufweist. An einem Ende des zentralen Trägers 4 ist die Kupplungsvorrichtung 2 angeordnet, am anderen Ende des zentralen Trägers 4 ist der zusammenklappbar ausgebildete, den eigentlichen Ladebereich bildende Teil des Fahrradträgers 1 vorgesehen. Hierfür sind zwei Trägerarme 5 mittels Konsolen 6 vorliegend exzentrisch bezüglich der Mittellängsachse des zentralen Trägers 4 verschwenkbar um Trägerarm-Schwenkachsen ST angebracht, wobei die Trägerarme 5 in ihrer zusammengeklappten Stellung im Wesentlichen parallel zueinander angeordnet sind und in ihrer aufgeklappten, einsatzbereiten Stellung im Wesentlichen miteinander fluchten. Ein etwa um 90° gebogen ausgebildeter Stützbügel 7 ist mit seinem in vorteilhafter Winkellage fixierbaren Schenkel oberhalb des zentralen Trägers 4, zwischen den schwenkbar angebrachten Endbereichen der Trägerarme 5 angeordnet und erstreckt sich mit seinem vertikal verlaufenden Schenkel etwas beabstandet von der Kupplungsvorrichtung 2 nach oben.

Bei einer alternativen Ausgestaltung können die Konsolen samt Trägerarmen auch auf der Mittellängsachse des zentralen Trägers angeordnet sein, d.h. anstelle von zwei unterschiedlichen, vorzugsweise parallelen Trägerarm-Schwenkachsen ist nur eine Trägerarm-Schwenkachse vorgesehen, um welche beide Trägerarme verschwenkbar sind.

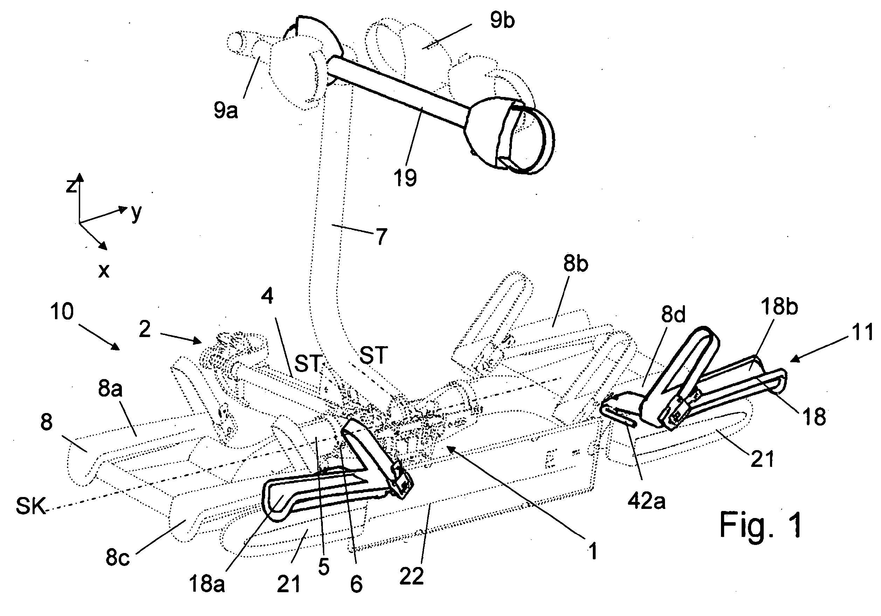

Sollen mit dem aufgeklappten Fahrradträger 1 beispielsweise zwei Fahrräder transportiert werden, so stehen dieselben parallel zueinander, in y-Richtung ausgerichtet, mit ihren Rädern auf entsprechend ausgebildeten Stellbereichen 8 (Stellbereiche 8a, 8b, 8c, 8d) an den Trägerarmen 5 und werden im oberen Bereich mittels Haltern 9 (Halter 9a, 9b) mit dem Stützbügel 7 auf an sich bekannte Weise verbunden. Die Trägerarme 5 sind hierbei derart ausgebildet, dass sie um ihre Längsachse drehbar in der jeweiligen Konsole 6 angeordnet und gelenkig mit dem Stützbügel verbunden sind, so dass die hieran gabelförmig ausgebildeten Stellbereiche 8 für die zu befördernde Last für die Zugänglichkeit zum Kofferraum des Fahrzeugs gemeinsam mit dem im zentralen Träger 4 gelagerten Stützbügel 7 vom Fahrzeug weg gekippt werden kann (siehe Kippachse SK in Fig. 1). In einer bevorzugten Ausführungsform können durch eine sich lösende Verbindung zwischen Trägerarm 5 und Stützbügel 7 die Trägerarme 5 im Nichtgebrauchsfall auch platzsparend ausgerichtet werden. Bei Gebrauch sind die Trägerarme 5 jedoch formschlüssig mit dem Stützbügel 7 verbunden und in ihren Konsolen 6 gelagert. Alternativ können die Trägerarme auch starr in den Konsolen angeordnet sein oder ggf. auch einstückig hiermit ausgebildet sein. Aufgrund ihrer Funktion wird auf die Gesamtheit von Konsole 6 und Trägerarm 5 sowie den Stellbereich 8 auch als Hebel 10 eingegangen. Zum Betätigen kann ein entsprechender, nicht dargestellter Griffbereich an allen Bereichen ausgebildet oder steif hiermit verbunden sein.

Der vorliegend in Fahrtrichtung des Fahrzeugs links angeordnete Trägerarm 5 ist gleichzeitig Betätigungselement für die Kupplungsvorrichtung 2, während der zweite Trägerarm 5 vorliegend keine in Verbindung mit der Kupplungsvorrichtung 2 stehende Zusatzfunktion hat. Im Prinzip kann jedoch das Verspannen mit dem Kopf der Anhängerkupplung auch unabhängig von der Betätigung der Trägerarme erfolgen, oder das Verspannen kann, wie in der DE 10 2010 036 898 A1 und DE 699 05 676 T2 beschrieben, unter Betätigung beider Trägerarme erfolgen.

Um mit dem Fahrradträger 1, wie er beispielsweise in der DE 10 2011 108 659 A1 offenbart ist, ein drittes Fahrrad transportieren zu können, ist am Fahrradträger 1 ein Erweiterungssatz 11 lösbar angebracht. Dieser Erweiterungssatz 11 weist als wesentliche Bestandteile zwei Stellbereiche 18 (erster Stellbereich 18a, zweiter Stellbereich 18b) auf, auf welchen - entsprechend zu den Stellbereichen 8 des Fahrradträgers 1 die Räder des dritten Fahrrads (nicht dargestellt) positioniert und befestigt werden können. Der erste Stellbereich 18a und damit der erste Teil des Erweiterungssatzes 1 ist vorliegend dem Teil des Fahrradträdgers 1 zugeordnet, welcher die Stellbereiche 8a und 8c aufweist, der zweite Stellbereich 18b und damit der zweite Teil des Erweiterungssatzes 1 ist vorliegend dem Teil des Fahrradträgers 1 zugeordnet, welcher die Stellbereiche 8b und 8d aufweist. Ferner ist ein dritter Halter 19 zur Befestigung des dritten Fahrrads am Stützbügel 7 vorgesehen. Der Halter 19 ist jedoch nicht notwendigerweise vorgesehen, da seine Funktion durch sonstige Elemente, wie beispielsweise Spanngurte, übernommen werden kann, so dass er nicht Teil des erfindungsgemäßen Erweiterungssatzes 11 ist.

Die Stellbereiche 18a und 18b des Erweiterungssatzes 11 sind seitlich von den Stellbereichen 8c und 8d lösbar angebracht, wofür die Trägerarme 5 entsprechend im Übergangsbereich zwischen dem Stellbereich 8c bzw. 8d und der jeweiligen Rückleuchte 21 ausgebildet sind. Vorliegend ist der erste Stellbereich 18a des Erweiterungssatzes 11 oberhalb der linken, am Fahrradträger 1 vorgesehenen Rückleuchte 21 angeordnet, der zweite Stellbereich 18b ist entsprechend oberhalb der zweiten Rückleuchte 21 angeordnet (siehe Fig. 1). Diese Anordnung der Stellbereiche 18 bewirkt eine leicht versetzte und erhöhte Anordnung des dritten Fahrrads relativ zu den ersten beiden Fahrrädern, welche gerade und in einer Ebene ausgerichtet auf dem Fahrradträger 1 positioniert sind.

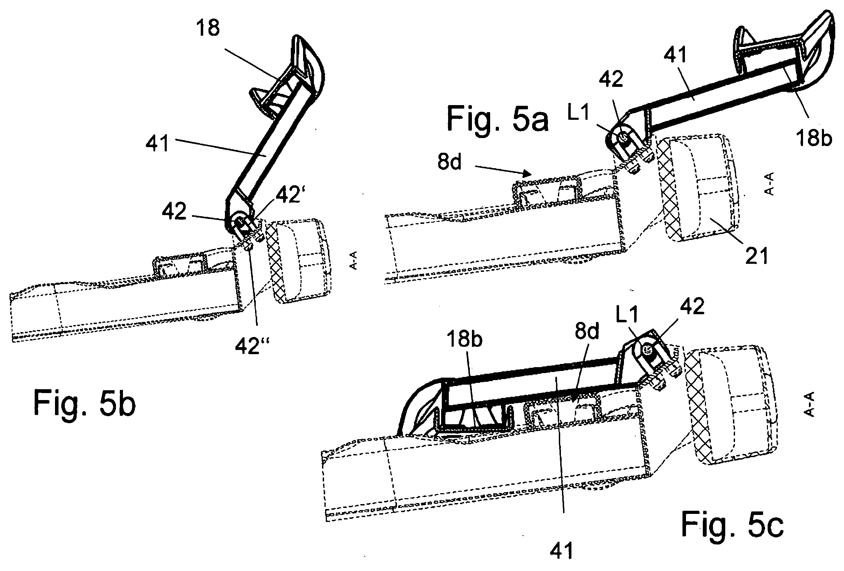

Im Folgenden wird unter Bezugnahme auf die Figuren 5a-5c das Schwenken der Stellbereiche 18 in die Zwischenstellung anhand des Stellbereichs 18b näher beschrieben. Das Schwenken des Stellbereichs 18a erfolgt entsprechend, so dass hierauf nicht nochmals Bezug genommen wird.

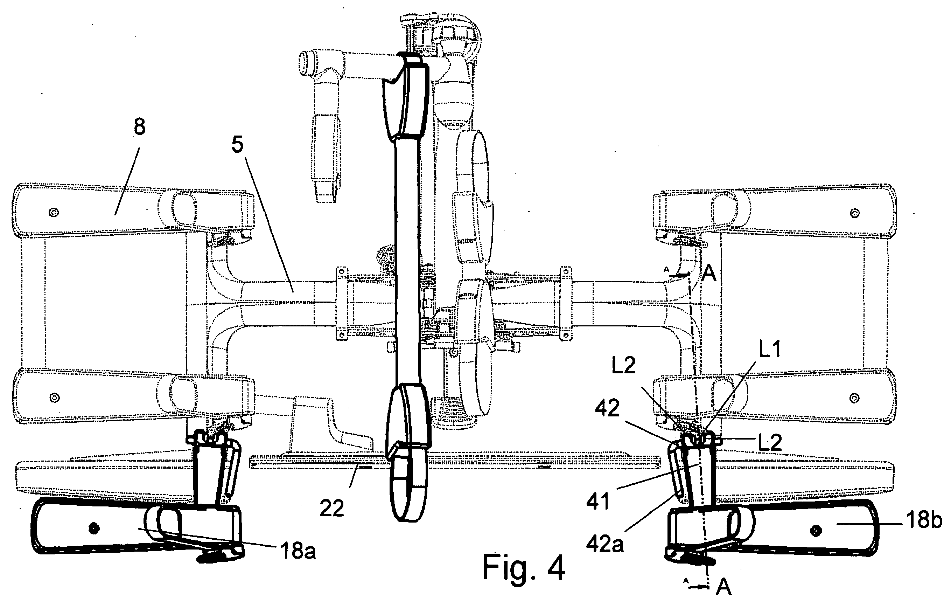

Im Folgenden wird von der nutzbereiten Ausgangsstellung ausgegangen, d.h. der Fahrradträger 1 samt Erweiterungssatz 11 befindet sich in seiner betriebsbereiten, aufgeklappten Stellung für drei Fahrräder. Der Stellbereich 18b ist in diesem zurückgeschwenkten, betriebsbereiten Zustand oberhalb der Rückleuchte 21 angeordnet, wobei er leicht nach hinten übersteht, vorliegend etwa um die Breite der leicht rinnenförmigen Radauflage. Die Radauflage ist an einem freien Ende eines Arms 41 angeordnet, welcher sich vom rückleuchtenseitigen Ende des Fahrradträgers 1 aus erstreckt und mit seinem anderen Ende am Fahrradträger 1 lösbar und insbesondere verschwenkbar gelagert ist, vorliegend um einen Bolzen 42 mit exzentrisch angeordneten Lagerstellen für die Lagerung des Bolzens 42 am Fahrradträger 1 (erste Lagerstelle L1, siehe Fig. 5a-5c) und für die Lagerung des Bolzens 42 am Arm 41 des entsprechenden Teils des Erweiterungssatzes 11 (zweite Lagerstelle L2, siehe Fig. 4), welche ein einfaches Lösen und Spannen in den Endstellungen (Fig. 5a und 5c) ermöglicht. Die erste Lagerstelle L1 Bolzen-Fahrradträger ist hierbei zentral zwischen der zweiten, zweigeteilten Lagerstelle L2 Bolzen-Arm angeordnet (siehe Fig. 4), wobei die zweite Lagerstelle L2 vorliegend durch Langlöcher ausgebildet ist.

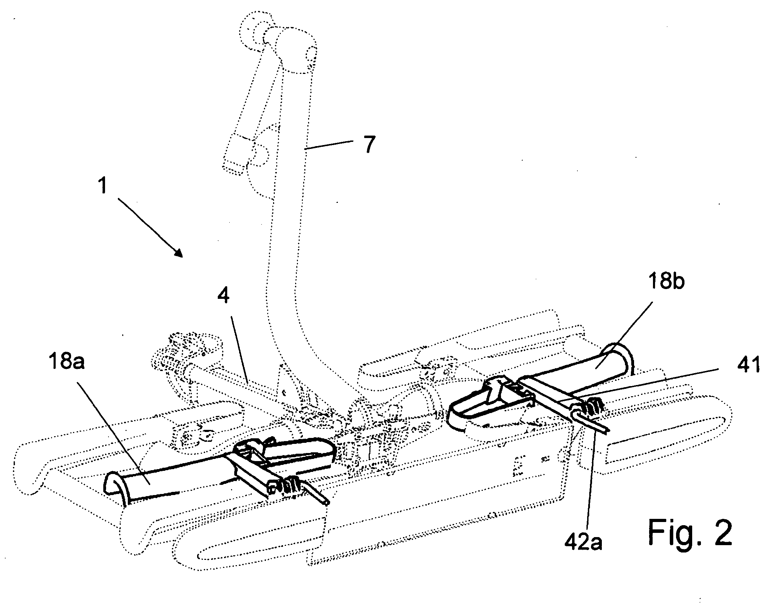

Für die Betätigung, d.h. das Lösen und Spannen, ist der Bolzen 42 mit einem um 90° gebogenen Hebelarm 42a ausgebildet (siehe Fig. 1, Fig. 2), welcher in verspannter Stellung vorliegend etwa in X-Richtung weist. Zum Lösen der Klemmverbindung, die durch die exzentrische Anordnung der Lagerstellen L1 und L2 bewirkt wird, wird der Hebelarm um ca. 180° geschwenkt, vorliegend zum Fahrzeug, und zum erneuten Verspannen wieder entsprechend zurückgeschwenkt.

Der Bolzen 42 bildet hierbei ein Spannelement, welches zum einen in einem durch einen U-förmigen Bügel gebildeten ersten Lager gelagert ist, welches in Verbindung mit dem entsprechenden, gelagerten Bereich des Bolzens 41 besagte erste Lagerstelle L1 (Bolzen-Fahrradträger) bildet. Dieser U-förmige Bügel dient ferner als Befestigungsmittel zur lösbaren Anbringung des Bolzens 41 samt des den Stellbereich 18b umfassenden Teils des Erweiterungssatzes 11 am Fahrradträger 1. Hierfür sind die Enden des U-förmigen Bügels mit Gewinden versehen, durch entsprechende Öffnungen, insbesondere Bohrungen, gesteckt, die im Fahrradträger 1 im Übergangsbereich zur Rückleuchte 21 vorgesehen sind, und mittels aufgeschraubter Muttern fixiert. Zusätzliche Sicherungselemente, wie Kontermuttern, Federringe oder dergleichen, können zur Sicherung der Schraubverbindungen vorgesehen sein. Der Bolzen 41 ist hierbei beabstandet vom Fahrradträger 1 angeordnet, wobei der Abstand durch die Geometrie des Arms 42 und des Übergangsbereichs des Fahrradträgers 1, an welchem der Teil des Erweiterungssatzes 11 angebracht ist, bestimmt wird (siehe Fig. 5a).

Der Bolzen 42 ist ferner im Arm 41 in einem zweiten Lager drehbar gelagert, wobei das am Arm ausgebildete zweite Lager in Verbindung mit dem entsprechenden, gelagerten Bereich des Bolzens 42 besagte zweite, zweigeteilte Lagerstelle L2 (Bolzen-Arm) bildet, die exzentrisch bezüglich der ersten Lagerstelle L1 angeordnet ist. In verspannter Stellung des Bolzens 42 liegt jeweils der Arm 41 im Bereich von Kontaktflächen, die am Arm 41 und am Fahrradträger 1 ausgebildet sind, flächig am Fahrradträger 1 an und wird vom Bolzen 42 gegen den Fahrradträger 1 gepresst.

Wird der Bolzen 42 zum Lösen der Klemmverbindung geschwenkt, sokönnen sich die Lagerstellen L2 um die doppelte Exzentrizität des Bolzens vom Fahrradträger 1 weg bewegen und der Arm 41 ist etwas weiter beabstandet vom Fahrradträger 1 positioniert, so dass die Relativstellung von Arm 41 und Fahrradträger 1 verändert und die Kontaktflächen Arm-Fahrradträger, die im gespannten Zustand aneinander anliegen, etwas beabstandet angeordnet sind, wodurch der Arm 41 um den Bolzen 42 verschwenkbar ist (siehe Fig. 5b).

Aufgrund der Geometrie des Arms 41 in Verbindung mit den Exzentrizitäten des Bolzens 42 ist nur in den beiden Endlagen des Arms 41 ein Zurückschwenken des Bolzens 42 möglich, so dass der Hebelarm 42a gleichzeitig auch ein Anzeigeelement für die korrekt gespannte Stellung bildet. Zur besseren optischen Wahrnehmung können entsprechende, farbig markierte Stellen vorgesehen sein, welche nur im korrekt gespannten Zustand vom Nutzer gesehen werden können.

Wie aus Fig. 5c ersichtlich, ist der Stellbereich 18b im zurückgeschwenkten Zustand, also im Zustand des Zwischenschritts vor dem Zusammenklappen des Fahrradträgers 1 mit Erweiterungssatz 11, derart angeordnet, dass der Arm 41 oberhalb des Stellbereichs 8d verläuft und die Radauflage direkt kupplungsseitig neben der Radauflage des Stellbereichs 8d positioniert ist. Damit ist der Stellbereich 18b zwischen den Stellbereichen 8b und 8d des Fahrradträgers 1 angeordnet, wobei er nur unwesentlich mit seinem Arm 41 nach oben übersteht. Auch in dieser Endstellung liegen im gespannten Zustand der Arm 41 und der Fahrradträger 1 mit Kontaktflächen flächig aneinander an, wobei die Kontaktflächen aufgrund der Exzentrizität der Lagerstellen L1 und L2 und der entsprechenden Ausrichtung des Bolzens 42 gegeneinandergespannt werden.

In beiden gespannten Endstellungen ist der Bolzen 42 in der gleichen Relativstellung im U-förmigen Bügel, jedoch in um ca. 180° verdrehter Relativstellung im Arm 41.

Das weitere Zusammenklappen des Fahrradträgers 1 erfolgt genau gleich wie ohne Erweiterungssatz 11.

Da, wie aus Fig. 4 ersichtlich, die Radauflagen der Stellbereiche 18 nach außen versetzt sind in Bezug auf die Arme 41, kann der Fahrradträger 1 auch mit eingeschwenktem Erweiterungssatz 11 genutzt werden, d.h. wenn nur 2 Fahrräder transportiert werden sollen, muss der Erweiterungssatz 11 weder abmontiert noch ausgeschwenkt werden (siehe Fig. 2).

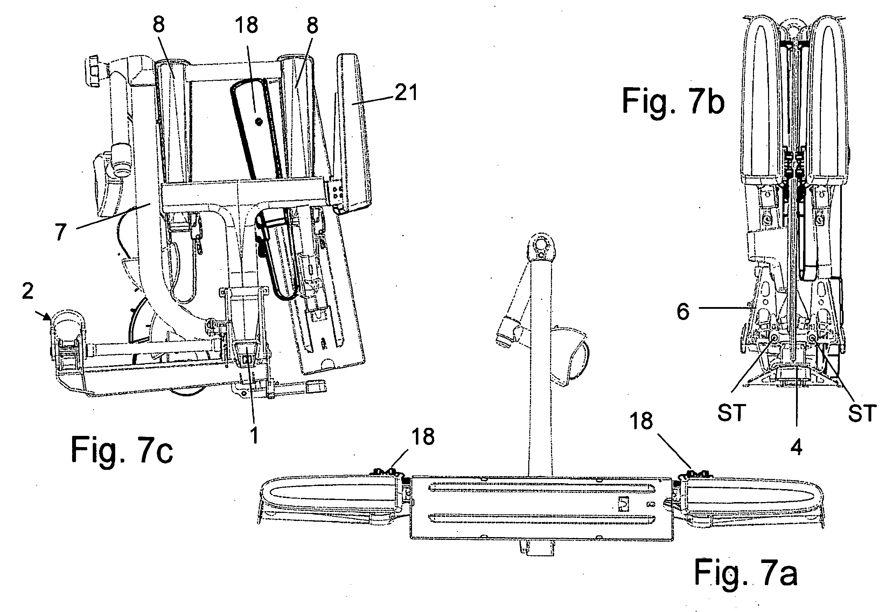

Der Vollständigkeit halber sei darauf hingewiesen, dass der Kennzeichenhalter 22 im aufgeklappten Zustand zwischen den beiden Rückleuchten 21 angeordnet ist, wobei er aufgrund seiner Anbringung an einem der beiden Trägerarme 5 des Fahrradträgers 1 im zusammengeklappten Zustand um ca. 90° gedreht und neben die Rückleuchte 21 geschoben ist. Aufgrund seiner exzentrischen Anbringung am Trägerarm 5 kommt er nach Drehen um 90° und dem Hochklappen des Trägerarms 5 mit seinem einen Ende zwischen den äußeren Stellbereichen 8c und 8d zu liegen, das andere Ende ist im Bereich der Trägerarm-Schwenkachsen ST positioniert (vgl. Fig. 7c).

Die Anbringung des Erweiterungssatzes 11 erfolgt zweckmäßigerweise im an der Anhängerkupplung stabilisierten Zustand des Fahrradträgers 1. Entsprechendes gilt auch für die Demontage des Erweiterungssatzes 11.

Das Anbringen des Fahrradträgers 1 mit Erweiterurigssatz 11 an der Anhängerkupplung erfolgt entsprechend dem Anbringen des Fahrradträgers 1 ohne Erweiterungssatz 11. Hierbei wird der Fahrradträger 1 samt dem hieran angebrachten Erweiterungssatz 11 stabilisiert auf die Anhängerkupplung aufgesetzt, anschließend wird zuerst der Trägerarm 5 ohne Spannfunktion, dann der Trägerarm 5 mit Spannfunktion herabgeklappt, wobei ein Spannbügel über den Kopf der Anhängerkupplung geschwenkt wird und mittels Spannens des Spannbügels wird der Fahrradträger 1 samt Erweiterungssatz 11 an der Anhängerkupplung fixiert. Das Einschwenken und Spannen des spannbügel erfolgt hierbei durch eine Schwenkbewegung eines einzigen als Bedienelement dienenden Hebels um eine Schwenkachse, die entsprechende Trägerarm-Schwenkachse ST.

Das Zusammenklappen des Fahrradträgers 1 mit Erweiterungssatz 11 gemäß dem Ausführungsbeispiel erfolgt entsprechend dem Zusammenklappen des Fahrradträgers 1 ohne Erweiterungssatz 11, wobei zuerst der Trägerarm 5 hochgeklappt wird, welcher keine Funktion in Hinblick auf das Befestigen an der Anhängerkupplung hat. Durch das Hochklappen des zweiten Trägerarms 5 wird der Spannbügel gelöst und zurückgeschwenkt, so dass der Fahrradträger 1 mit Erweiterungssatz 11 gemeinsam von der Anhängerkupplung abgenommen und gelagert werden kann.

Vorliegend ist sowohl die Anordnung im aufgeklappten, betriebsbereiten Zustand als auch im zusammengeklappten Zustand spiegelbildlich zur Mittellängsebene, entsprechend derjenigen des Fahrradträgers 1 mit seinen Stellbereichen 8. Dennoch ist das Packmaß des Fahrradträgers 1 ohne Erweiterungssatz 11 gleich groß wie das Packmaß (Lmax x Bmax x Hmax) des Fahrradträgers 1 mit eingeklappten Erweiterungssatz 11, d.h. die Außenabmessungen des zusammengeklappten Lastenträgers 1 ohne Erweiterungssatz 11 und mit Erweiterungssatz 11 sind gleich.

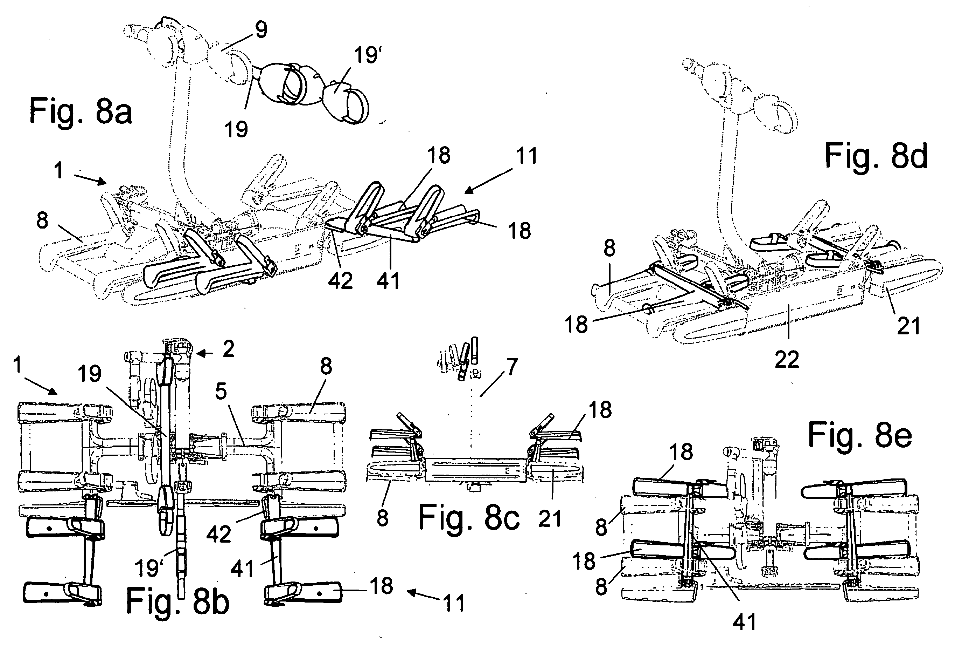

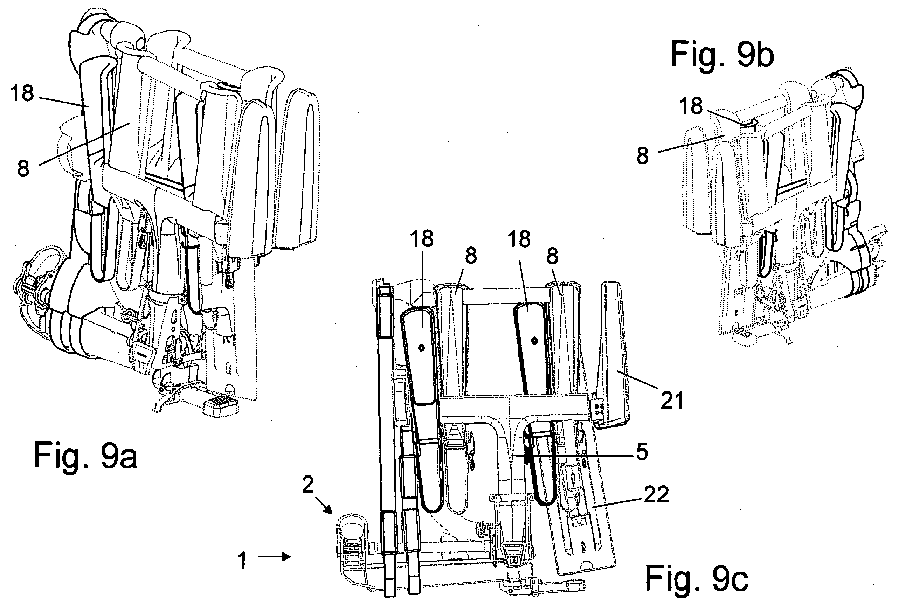

Im Folgenden wird unter Bezugnahme auf Fig. 8a-9c ein alternativer Erweiterungssatz 11 in Verbindung mit dem vorstehend beschriebenen Fahrradträger 1 näher beschrieben, wobei für gleiche oder gleichwirkende Elemente die gleichen Bezugszeichen verwendet werden. Ferner werden im Folgenden nur Unterschiede näher beschrieben.

Der alternative Erweiterungssatz 11 weist im Unterschied zum vorstehend beschriebenen Erweiterungssatz 11 zwei Stellplätze für Fahrräder auf, d.h. es können mit dem Fahrradträger 1 samt alternativem Erweiterungssatz 11 insgesamt vier Fahrräder transportiert werden. Hierbei wird das dritte Fahrrad mit dem Halter 19 entsprechend dem zuvor beschriebenen Ausführungsbeispiel gehalten, das vierte Fahrrad wird mittels eines Zusatzhalters 19' gehalten, welcher zwischen dem dritten und vierten Fahrrad angeordnet ist.

Das Aus- und Einschwenken der Arme 41, welche die Stellbereiche 18 tragen, erfolgt wie zuvor beschrieben, d.h. die Arme 41 sind sowohl im ausgeschwenkten, d.h. für vier Fahrräder nutzungsbereiten Zustand, als auch im eingeschwenkten, d.h. für zwei Fahrräder nutzungsbereiten Zustand, mittels der zuvor beschriebenen, exzentrischen Lagerung des Bolzens 42 fixiert.

Im ausgeschwenkten Zustand sind die Stellbereiche 18 des Erweiterungssatzes 11 etwas erhöht angeordnet (siehe Fig. 8c). Im eingeschwenkten Zustand der Arme 41 sind die Stellbereiche 18 versetzt zu den Stellbereichen 8 positioniert (siehe Fig. 8d, 8e). Hierbei sind die Stellbereiche 18 für das dritte Fahrrad im wesentlichen entsprechend den Stellbereichen 18 des Erweiterungssatzes 11 für ein zusätzliches Fahrrad angeordnet. Die Stellbereiche 18 für das vierte Fahrrad sind fahrzeugseitig versetzt zu den Stellbereichen 8 für das erste Fahrrad angeordnet.

Durch die versetzte Anordnung der Stellbereiche 8, 18 vergrößert sich das Packmaß des Fahrradträgers 1 mit angebautem, alternativen Erweiterungssatz 11 nicht oder nur unwesentlich gegenüber dem Fahrradträger 1 ohne Erweiterungssatz 11.

Durch die Einschwenkbarkeit des Erweiterungssatzes 11, verbunden mit gleichzeitiger Nutzbarkeit des Fahrradträgers 1 für zwei Fahrräder, lässt sich so der Überstand des Fahrradträgers 1 (samt Erweiterungssatz 11) nach hinten verringern, wenn nur zwei Fahrräder transportiert werden sollen.

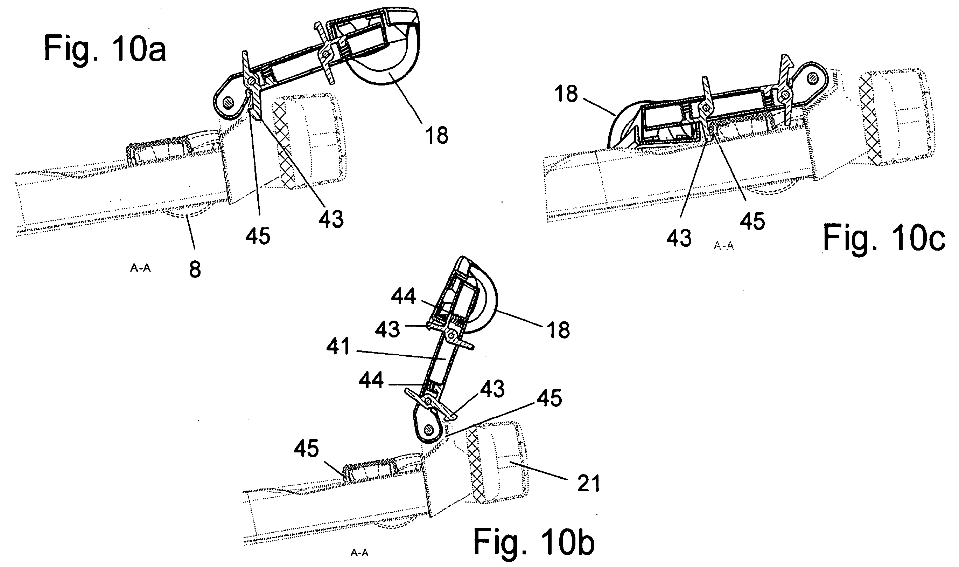

Im Folgenden wird unter Bezugnahme auf Fig. 10a-10c eine alternative Fixierung des Arms 41 in eingeschwenktem und ausgeschwenktem Zustand näher beschrieben, welche die Nutzbarkeit des Fahrradträgers 1 mit Erweiterungssatz 11 (oder mit alternativem Erweiterungssatz 11 - nicht dargestellt) im eingeschwenkten Zustand (d.h. für 2 Fahrräder) oder im ausgeschwenktem Zustand (d.h. für 3 bzw. 4 Fahrräder) ermöglicht.

Anstelle des exzentrisch gelagerten Bolzens 42, welcher ein Verspannen in den beiden Endstellungen ermöglicht, sind zwei Klinken 43 vorgesehen, welche Arm 41 schwenkbar und vorgespannt mittels entsprechender Federn 44 angeordnet sind. Die Klinken 43 greifen in entsprechende Rastbereiche 44 ein, welche am Fahrradträger 1 ausgebildet sind. So greift im ausgeschwenkten Zustand des Arms 41 die schwenkachsennahe Klinke 43 in einen Rastbereich 44 ein, gebildet durch eine Öffnung im Übergangsbereich zur Rückleuchte 21. Im eingeschwenkten Zustand des Arms 41 greift die andere, schwenkachsenferne Klinke 43 in den zweiten Rastbereich 44 ein, gebildet durch eine Kante am Fahrradträger 1.

Neben den beiden vorstehend beschriebenen Möglichkeiten zur Fixierung der Arme 41 am Fahrradträger 1 sind auch beliebige andere Fixierungsmöglichkeiten in den beiden Endstellungen möglich, wie beispielsweise mittels Schrauben, die durch eine Bohrung im Arm gesteckt und in am Fahrradträger vorgesehene Gewinde eingeschraubt werden, Bolzen, die durch in den Endstellungen fluchtende Öffnungen geschoben werden.

### Bezugszeichenliste

1 Fahrradträger
2 Kupplungsvorrichtung
4 zentraler Träger
5 Trägerarm
6 Konsole (für Trägerarm)
7 Stützbügel
8 Stellbereich
8a erster Stellbereich (erstes Fahrrad)
8b zweiter Stellbereich (erstes Fahrrad)
8c erster Stellbereich (zweites Fahrrad)
8d zweiter Stellbereich (zweites Fahrrad)
9 Halter
9a Halter (erstes Fahrrad)
9b Halter (zweites Fahrrad)
10 Hebel
11 Erweiterungssatz
18 Stellbereich
18a erster Stellbereich (drittes Fahrrad)
18b zweiter Stellbereich (drittes Fahrrad)
19 Halter (drittes Fahrrad)
19' Zusatzhalter (viertes Fahrrad)
21 Rückleuchte
22 Kennzeichenhalter
41 Arm
42 Bolzen
42a Hebelarm
43 Klinke
44 Feder
45 Rastbereich
L1 erste Lagerstelle (Bolzen-Fahrradträger)
L2 zweite Lagerstelle (Bolzen-Arm)
SK Kippachse
ST Trägerarm-Schwenkachse

## Patentansprüche

1. Zusammenklappbarer Fahrradträger (1) zur Anbringung an einem Fahrzeug, welcher zum Transport eines oder mehrerer Fahrräder dient, mit einem Erweiterungssatz (11), wobei der Fahrradträger (1) fahrradträgerfeste Stellbereiche (8) für Laufräder der Fahrräder aufweist, und jeweils zwei Stellbereiche (8a, 8b bzw. 8c, 8d) einem Fahrrad zugeordnet sind,
wobei die Stellbereiche (8) des Fahrradträgers (1) zum Zusammenklappen um mindestens eine Schwenkachse (ST) verschwenkbar sind und der Fahrradträger (1) im zusammengeklappten Zustand ein erstes Packmaß hat, und
der Erweiterungssatz (11) am Fahrradträger (1) lösbar angebracht ist und mindestens einen ersten Stellbereich (18a) und mindestens einen getrennt vom ersten Stellbereich (18a) ausgebildeten zweiten Stellbereich (18b) aufweist, welche den Laufrädern mindestens eines weiteren Fahrrads zugeordnet sind, und die beiden, die Stellbereiche (18a, 18b) aufweisenden Teile des Erweiterungssatzes (11) am klappbaren Bereich des Fahrradträgers (1) lösbar und in Richtung der fahrradträgerfesten Stellbereiche (8) vor- und zurückschwenkbar angebracht sind, wobei
der Fahrradträger (1) mitsamt angebautem, vorgeschwenktem Erweiterungssatz (11) auf ein zweites Packmaß zusammenklappbar ist, und
die beiden, die Stellbereiche (18a, 18b) aufweisenden Teile des Erweiterungssatzes (11) aus- und einschwenkbar ausgebildet sind, wobei der Fahrradträger (1) im eingeschwenkten und im ausgeschwenkten Zustand nutzbar ist,
**dadurch gekennzeichnet, dass** die beiden, die Stellbereiche (18a, 18b) aufweisenden Teile des Erweiterungssatzes (11) sowohl im eingeschwenkten als auch im ausgeschwenkten Zustand fixiert sind, wobei die verschwenkbare Lagerung der beiden Teile des Erweiterungssatzes (11) jeweils eine erste Lagerstelle (L1) und eine zweite Lagerstelle (L2) aufweist, wobei ein in beiden Lagerstellen (L1, L2) schwenkbar gelagertes Element je nach Relativstellung ein Verspannen des entsprechenden Teils des Erweiterungssatzes (11) mit dem Fahrradträger (1) in der vorgeschwenkten Stellung, ein Verspannen des entsprechenden Teils des Erweiterungssatzes (11) mit dem Fahrradträger (1) in der zurückgeschwenkten Stellung sowie ein Schwenken des entsprechenden Teils des Erweiterungssatzes (11) relativ zum Lastenträger (1) ermöglicht, wobei die Lagerstellen (L1, L2) exzentrisch zueinander angeordnet sind.

2. Zusammenklappbarer Fahrradträger mit Erweiterungssatz nach Anspruch 1, **dadurch gekennzeichnet, dass** das schwenkbar gelagerte Element ein Bolzen (42) mit exzentrisch in Bezug auf die Bolzenlängsachse angeordneten Lagerstellen (L1, L2) ist, wobei die erste Lagerstelle (L1) ein am Fahrradträger (1) ausgebildetes erstes Lager und einen am Bolzen (42) ausgebildeten, gelagerten Bereich aufweist, und die zweite Lagerstelle (L2) ein an einem Teil des Erweiterungssatzes (11) ausgebildetes zweites Lager und einen am Bolzen (42) ausgebildeten, gelagerten Bereich aufweist.

3. Zusammenklappbarer Fahrradträger mit Erweiterungssatz nach Anspruch 2, **dadurch gekennzeichnet, dass** das erste Lager durch einen U-förmigen Bügel gebildet ist.

4. Zusammenklappbarer Fahrradträger mit Erweiterungssatz nach Anspruch 2 oder 3, **dadurch gekennzeichnet, dass** das zweite Lager zweigeteilt ausgebildet und auf beiden Seiten benachbart des ersten Lagers angeordnet ist.

5. Zusammenklappbarer Fahrradträger mit Erweiterungssatz nach einem der vorhergehenden Ansprüche, **dadurch gekennzeichnet, dass** die Relativstellung des Elements im ersten Lager in vorgeschwenkter, gespannter Stellung und in zurückgeschwenkter, gespannten Stellungen gleich ist.

6. Zusammenklappbarer Fahrradträger mit. Erweiterungssatz nach einem der vorhergehenden Ansprüche, **dadurch gekennzeichnet, dass** bei einem Erweiterungssatz (11) für ein Fahrrad der erste und der zweite Stellbereich (18a, 18b) des Erweiterungssatzes (11) in einem Zwischenschritt zum Zusammenklappen des Fahrradträgers (1) samt Erweiterungssatz (11) zwischen den zwei Stellbereichen (8a, 8b bzw. 8c, 8d) des Fahrradträgers (1) positioniert sind.

7. Zusammenklappbarer Fahrradträger mit Erweiterungssatz nach einem der vorhergehenden Ansprüche, **dadurch gekennzeichnet, dass** der erste und der zweite Stellbereich (18a, 18b) des Erweiterungssatzes (11) in einem Zwischenschritt zum Zusammenklappen des Fahrradträgers (1) samt Erweiterungssatz (11) vorschwenkbar sind, wobei die Stellbereiche (18a, 18b) versetzt zu den Stellbereichen (8a, 8b, 8c, 8d) des Fahrradträgers (1) angeordnet sind, und der Fahrradträger (1) in der Anordnung entsprechend dem Zwischenschritt zum Zusammenklappen ohne Demontage des Erweiterungssatzes (11) nutzbar ist.

8. Zusammenklappbarer Fahrradträger mit Erweiterungssatz nach einem der vorhergehenden Ansprüche, **dadurch gekennzeichnet, dass** das zweite Packmaß des Fahrradträgers (1) mit angebautem Erweiterungssatz (11) gleich groß wie das erste Packmaß des Fahrradträgers (1) ohne Erweiterungssatz (11) ist.

9. Zusammenklappbarer Fahrradträger mit Erweiterungssatz nach einem der vorhergehenden Ansprüche, **dadurch gekennzeichnet, dass** die Lagerstelle zur verschwenkbaren Lagerung des Erweiterungssatzes (11) im aufgeklappten Zustand des Fahrradträgers (1) hinter und oberhalb der fahrradträgerfesten Stellbereiche (8) angeordnet ist.

## Claims

1. Collapsible bicycle rack (1) for mounting on a vehicle which serves for the transport of one or more bicycles, with an expansion set (11), in which the bicycle rack (1) presents positioning areas fixed on the bicycle rack (8) for the wheels of the bicycles, and respectively two positioning areas (8a, 8b or 8c, 8d) are assigned to a bicycle,
wherein the positioning areas (8) of the bicycle rack (1) are pivotable for folding around at least one pivoting axis (ST) and the bicycle rack (1) in the collapsed state has a first packing size, and
the extension set (11) is detachably applied to the bicycle rack (1) and presents at least one first positioning area (18a) and at least one second positioning area (18b) configured separated from the first positioning area (18a), which are assigned to the wheels of at least one further bicycle, and the two parts of the expansion set (11) comprising the positioning areas (18a, 18b) are mounted in a detachable way on the folding area of the bicycle rack (1) and in a pivotable way forward and backward, in direction of the positioning areas fixed on the bicycle rack (8), in which
the bicycle rack (1) together with the built-on expansion set forward pivoted (11) is collapsible on a second packing size, and
the two parts of the expansion set (11) comprising the positioning areas (18a, 18b) are configured to be pivoted inward and outward, where the bicycle rack (1) can be used in the inward pivoted and in the outward pivoted state,
**characterised in that** the two parts of the expansion set (11) comprising the positioning areas (18a, 18b) are both fixed in the inward pivoted and in the outward pivoted state, wherein the pivotable mounting of the two parts of the expansion set (11) each presents a first bearing location (11) and a second bearing location (L2), in which an element pivotally placed in both bearing locations (L1, L2), deperlding on the relative position allow of a tightening of the corresponding part of the expansion set (U) with the bicycle rack (1) in the forward pivoted position, a tightening of the corresponding part of the expansion set (11) with the bicycle rack (1) in the backward pivoted position as well as a pivoting of the corresponding part of the expansion set (11) relative to the rack (1), wherein the bearing locations (L1, L2) are arranged off-centre towards each other.

2. Collapsible bicycle rack with expansion set according to claim 1, **characterised in that** the element mounted pivotably is a bolt (42) with bearing locations (L1, L2) arranged off-centre in relation to the longitudinal axis of the bolt, wherein the first bearing location (L1) presents a first bearing configured on the bicycle rack (1) and a bearing area configured on the bolt (42), and the second bearing location (L2) presents a second bearing configured on a part of the expansion set (11) and a bearing area configured on the bolt (42).

3. Collapsible bicycle rack with expansion set according to claim 2, **characterised in that** the first bearing is formed by a U-shaped bracket.

4. Collapsible bicycle rack with expansion set according to claim 2 or 3, **characterised in that** the second bearing is configured in two parts and is arranged on both sides adjacent to the first bearing.

5. Collapsible bicycle rack with expansion set according to any of the previous claims, **characterised in that** the relative position of the element in the first bearing in forward pivoted tensioned position is the same as in back pivoted tensioned position.

6. Collapsible bicycle rack with expansion set according to any of the previous claims, **characterised in that** in one expansion set (11) for a bicycle the first and the second positioning area (18a, 18b) of the expansion set (11), in an intermediate step for folding the bicycle rack (1) together with expansion set (11), are placed between the two positioning areas (8a, 8b, or 8c, 8d) of the bicycle rack (1).

7. Collapsible bicycle rack with expansion set according to any of the previous claims, **characterised in that** the first and the second positioning area (18a, 18b) of the expansion set (11) in an intermediate step for folding the bicycle rack (1) together with expansion set (11) can be pivoted forwards, wherein the positioning areas (18a, 18b) are arranged to the positioning areas (8a 8b, 8b, 8c, 8d) of the bicycle rack (1), and the bicycle rack (1) can be used in the arrangement according to the intermediate step for folding without disassembling of the expansion set (11).

8. Collapsible bicycle rack with expansion set according to any of the previous claims, **characterised in that** the second packing size of the bicycle rack (1) with mounted expansion set (11) has the same size as the first packing size of the bicycle rack (1) without expansion set (11).

9. Collapsible bicycle rack with expansion set according to any of the previous claims, **characterised in that** the bearing location for pivotable bearing of the expansion set (11) in the unfolded state of the bicycle rack (1) is arranged behind and above the positioning areas fixed on the bicycle rack (8).

## Revendications

1. Porte-vélo repliable (1) pour l'application à un véhicule qui sert au transport d'une ou plusieurs bicyclettes, avec un kit d'extension (11), où le porte-vélo (1) présente des zones de positionnement fixées au porte-vélo (8) pour les roues des bicyclettes, et respectivement deux zones de positionnement (8a, 8b ou 8c, 8d) sont associées à une bicyclette,
où les zones de positionnement (8) du porte-vélo (1) pour le replier peuvent pivoter autour d'au moins un axe pivotant (ST) et le porte-vélo (1) dans l'état replié a une première mesure de rangement, et
le kit d'extension (11) est appliqué de manière amovible au porte-vélo (1) et présente au moins une première zone de positionnement (18a) et au moins une seconde zone de positionnement (18b) conformée séparée de la première zone de positionnement (18a), qui sont associées aux roues d'au moins une ultérieure bicyclette, et les deux parties du kit d'extension (11) qui présentent les zones de positionnement (18a, 18b) sont appliquées de manière amovible à la zone repliable du porte-vélo (1) et de manière à pivoter en avant et en arrière en direction des zones de positionnement appliquées au porte-vélo (8), où le porte-vélo (1) avec kit d'extension monté et pivoté en avant (11) est repliable à une seconde mesure de rangement, et
les deux parties du kit d'extension (11) qui présentent les zones de positionnement (18a, 18b) peuvent pivoter vers l'extérieur et vers l'intérieur, le porte-vélo (1) étant utilisable dans l'état pivoté vers l'intérieur et pivoté vers l'extérieur,
**caractérisé en ce que** les deux parties du kit d'extension (11) qui présentent les zones de positionnement (18a, 18b) sont fixées dans l'état pivoté vers l'intérieur et pivoté vers l'extérieur, où le logement pivotant des deux parties du kit d'extension (11) chacune présente un premier point de support (11) et un second point de support (L2), où un élément placé de façon pivotante dans les deux points de support (L1, L2) selon la position relative de la partie correspondante permet de serrer le kit d'extension (11) avec le porte-vélo (1) dans la position pivotée en avant, et de serrer la partie correspondante du kit d'extension (11) avec le porte-vélo (1) dans la position pivotée en arrière ainsi qu'un pivotement de la partie correspondante du kit d'extension (11) par rapport au porte-vélo (1), où les points de support (L1 L2) sont arrangés excentriques l'un par rappels l'autre.

2. Porte-vélo repliable avec kit d'extension selon la revendication 1, **caractérisé en ce que** l'élément monté de façon pivotante est un boulon (42) avec des points de support (L1, L2) disposés excentriques par rapport à l'axe longitudinal du boulon, où le premier point de support (L1) présente un premier palier conformé sur le porte-vélo (1) et une zone de support canformée sur le boulon (42), et le second point de support (L2) présente un second palier conformé sur une partie du kit d'extension (11) et une zone de support conformée sur le boulon (42).

3. Portez repliable avec kit d'extension selon la revendication 2, **caractérisé en ce que** le premier palier est formé par un étrier en forme de U.

4. Porte-vélo repliable avec kit d'extension selon la revendication 2 ou 3, **caractérisé en ce que** le second palier est conformé en deux parties et est arrange des deux côtés adjacentes au premier palier.

5. Porte-vélo repliable avec kit d'extension selon une des revendications précédentes, **caractérisé en ce que** la position relative de l'élément dans le premier palier en position serrée pivotée en avant est la même qu'en position serrée pivotée sen arrière.

6. Porte-vélo repliable avec kit d'extension selon une des revendications précédentes, **caractérisé en ce que** dans un kit d'extension (11) pour une bicyclette la première et la seconde zone de positionnement (18a, 18b) du kit extension (11), dans une étape intermédiaire pour replier le porte-vélo (1) avec kit d'extension (11), sont positionnées entre le deux zones de positionnement (8a, 8b ou 8c, 8d) du porte-vélo (1).

7. Porte-vélo repliable avec kit d'extension selon une des revendications précédentes, **caractérisé en ce que** la première et la seconde zone de positionnement (18a, 18b) du kit d'extension (11) dans une opération intermédiaire pour replier le porte-vélo (1) avec kit d'extension (11) peuvent pivoter en avant, où les zones de positionnement (18a, 18b) sont arrangées décalées par rapport aux zones de positionnement (8a 8b, 8c, 8d) du porte-vélo (1), et que le porte-vélo (1) est utilisable dans l'arrangement conforme à l'étape intermédiaire pour le replier sans démontage du kit d'extension (11).

8. Porte-vélo repliable avec kit d'extension selon une des revendications précédentes, **caractérisé en ce que** la seconde mesure de rangement du porte-vélo (1) avec kit d'extension monté (11) a la même mesure que la première mesure de rongement du porte-vélo (1) sans kit d'extension (11).

9. Porte-vélo repliable avec kit d'extension selon une des revendications précédentes, **caractérisé en ce que** le point de support pour le montagne à pivotement du kit d'extension (11) dans l'état ouvert du porte-veto (1) est arrangé derrière et au-dessus des zones de positionnement fixées sur le porte-vélo (8).
